# EUROPEAN PATENT APPLICATION

(11) **EP 4 445 747 A1**
(43) Date of publication of application: **16.10.2024**
(21) Application number: 22903409.5
(22) Date of filing: 05.12.2022
(51) Int. Cl.: A23L 13/40, A23L 13/00, A23L 13/60, A23L 33/185

(54) **TEXTURE IMPROVER AND APPLICATION THEREOF**

(30) Priority: 06.12.2021 CN 202111478762
(71) Applicant: DSM IP Assets B.V., 6411 TE Heerlen (NL); Zhejiang Dsm Zhongken Biotechnology Co., Ltd, Zhejiang 314515 (CN)
(72) Inventor: HE, Shanshan, Shanghai 201203 (CN); ZHANG, Fei, Shanghai 201203 (CN)
(74) Representative: Grey, Ian Michael
(86) International application number: PCT/CN2022/136677
(87) International publication number: WO 2023/103987

(57) **Abstract**

The present application relates to a texture improver. The texture improver comprises curdlan and rapeseed protein at a weight ratio of 1:9 to 9: 1. When used in food, particularly in a meat product or a plant-based meat product, the texture improver can remarkably improve the texture and taste of the product, and meets clean food label requirements.

## Description

### TECHNICAL FIELD

The present application relates to a texture improver comprising curdlan and rapeseed protein, and to a method for preparing the same and application thereof. The present application also relates to the use of the combination of curdlan and rapeseed protein in the preparation of food products, as well as food products comprising the curdlan and rapeseed protein.

### BACKGROUND

Curdlan, also known as gel-forming polysaccharide and thermal gel, is a microbial extracellular polysaccharide discovered and named by Harada et al. in 1964, which is a linear macromolecule composed of glucose structural units linked by β-1,3-D-glucosidic linkages, and has been receiving attention of the food industry, due to its low-temperature reversible and high-temperature irreversible gel properties as well as freezing resistance and heat stability. The Ministry of Health of China formally approved in 2006 that curdlan can be directly added to food, such as use in the production of meat food, pasta food, aquatic food, baked food, frozen food, fried food, as stabilizers, coagulants, thickeners, water-holding agents, binders, film-forming agents, etc.

When used in meat products or plant-based meat products, the water retention, cooking resistance and freezing resistance of food can be improved, but in order to realize the ideal gel texture, it is usually necessary to add transglutaminase, or to compound the curdlan with other hydrocolloids to realize the ideal product texture (such as gel strength, springiness, etc.). However, such technology has problems such as high cost, complicated operation, and that the slurry cannot be left at room temperature for a long time, or the amount of hydrocolloid is high, which affects the nutritional value and taste of the product.

Therefore, there is still a need to improve the gel texture or taste of food products by taking advantage of the excellent gelation properties of curdlan, such as freezing resistance and heat stability, and at the same time obtaining the ideal gel strength.

### DETAILED DESCRIPTION

The present application provides a texture improver comprising curdlan and rapeseed protein, wherein the weight ratio of the curdlan to the rapeseed protein is from 1:9 to 9:1, preferably from 1:4 to 4:1, more preferably from 2:3 to 3:2; and more preferably, wherein the weight ratio of the curdlan to the rapeseed protein is about 1: 1. In the present application, the curdlan is present in the texture improver in an amount of 25%, 30%, 35%, 40%, 45%, 50%, 55%, 60%, or 65% by weight, based on the total weight of the curdlan and the rapeseed protein, preferably in an amount of 45%, 46%, 47%, 48%, 49%, 50%, 51%, 52%, 53%, 54%, or 55% by weight, based on the total weight of the curdlan and the rapeseed protein. In the present application, the weight ratio of the curdlan to the rapeseed protein in the texture improver may be 1:9, 1:4, 3:7, 2:3, 1:1, 3:2, 7:3, 4:1, or 9:1, preferably 1:3, 1:2.5, 1:2, 1:1.5, 1:1, 1.5:1, 2:1, 2.5:1, or 3:1, more preferably 2:3, 2.5:3, 1:1, 3:2.5 or 3:2. The rapeseed protein in the texture improver is not textured vegetable protein.

In the present application, the texture improver is a substance which when added to a food product is capable of improving one or more textural properties of the food product, in which the textural properties may be strength, hardness, viscosity, springiness, cohesiveness, chewiness, adhesiveness or resilience. The texture improver may be a binder, a thickener or a gelling agent.

Without wishing to be limited by any theory or explanation, the inventors have found that the gel strength of the curdlan is significantly weakened when the curdlan is used in combination with plant-based proteins (soy proteins and/or potato proteins). However, when the soy protein and/or potato protein is replaced with rapeseed proteins and the rapeseed protein is used in combination with the curdlan, it will not significantly affect the gel strength of the curdlan, and the use of rapeseed proteins significantly improves the textural properties of the added system compared to other proteins (especially soy proteins), especially the gel strength. When adding the rapeseed protein and the curdlan as a binder to meat or plant-based meat products, desirable textural properties, especially hardness, springiness and chewiness, can be achieved.

The texture improver of the present application may comprise or not comprise other polysaccharide or derivative components thereof, such as one or more of methyl cellulose, starch, gum arabic, gelatin, guar gum, locust bean gum, carrageenan, xanthan gum, gellan gum, pectin, and konjac gum, preferably may comprise starch and/or xanthan gum, or preferably the texture improver does not comprise polysaccharides or derivatives thereof other than starch, or preferably, the texture improver does not comprise other polysaccharides or derivatives thereof. In the present application, the curdlan may be the only hydrocolloid in the texture improver. In the present application, the texture improver is free of or substantially free of methyl cellulose.

In the present application, the texture improver may be added to a liquid or to a solid composition. The amount of the texture improver to be added can be adjusted appropriately according to the type and state of the system to be added, and the content of the curdlan in the texture improver to be used, etc. The texture improver is added in an amount such that the weight percentage of the curdlan in the added system is 0.1-15%, preferably 0.2-10%.

In one embodiment of the present application, the texture improver is a binder. In one embodiment of the present application, the texture improver is a binder for meat products. In one embodiment of the present application, the texture improver is a binder for plant-based meat products.

In the present application, the term "binder" refers to a substance that binds particles and/or fibers together. The binder in the present application is an edible substance that binds the matrix together in the final product to form a sticky product. The binder may help to form a smoother product texture, retain moisture and/or maintain the shape of the sticky product. Preferably, the binder described in the present application is a binder for use in meat or plant-based meat products, more preferably, the binder is a binder for use in plant-based meat products. In the present application, the meat products or plant-based meat products also comprise aquatic products.

In the present application, the binder may further comprise a dispersant that reduces the aggregation of hydrocolloids and/or proteins, and the dispersant may be one or more of an alkali agent, an alkali metal salt, an organic acid salt, and an inorganic acid salt; the dispersant may be water, preferably the dispersant is water. In the present application, the binder may or may not comprise one or more of other polysaccharides or derivatives thereof, such as methyl cellulose, starch, gum arabic, gelatin, guar gum, locust bean gum, carrageenan, xanthan gum, gellan gum, pectin, and konjac gum, preferably the binder of the present application comprises less methyl cellulose as compared to existing binders for meat products or plant-based meat products, more preferably the binder of the present application is free of or substantially free of methyl cellulose. In the present application, the binder may or may not comprise other protein components, such as other plant-based proteins and/or animal proteins, preferably, the binder of the present application is free of or substantially free of eggs, egg whites and/or egg yolks. In the present application, the binder may be a liquid or a powder.

In one embodiment of the present application, the total weight of the curdlan and the rapeseed protein in said binder may be at least 2% of the weight of the binder. In another embodiment of the present application, the total weight of the curdlan and the rapeseed protein in the binder may be 80% or more by weight of the binder. In one embodiment of the present application, the binder is mainly composed of curdlan and rapeseed protein. In one embodiment of the present application, the binder is a binder for use in plant-based meat products.

In one embodiment of the present application, the texture improver is a thickener.

In the present application, the term "thickener" refers to a substance capable of increasing the viscosity of a system, which allows the system (such as a food product) to maintain a uniform and stable suspension, or an emulsion, or form a gel.

In the present application, said thickener may further comprise a dispersant that reduces the aggregation of hydrocolloids and/or proteins, the dispersant may be one or more of an alkali agent, an alkali metal salt, an organic acid salt, an inorganic acid salt, and the dispersant may be water. In the present application, the thickener may or may not comprise other polysaccharides or derivatives thereof, such as one or more of methyl cellulose, starch, gum arabic, gelatin, guar gum, locust bean gum, carrageenan, xanthan gum, gellan gum, pectin, and konjac gum, and preferably the thickener of the present application comprises less methyl cellulose as compared to the existing thickeners, and more preferably the thickener of the present application is free of or substantially free of methyl cellulose. In the present application, the thickener may be a liquid or a powder.

In one embodiment of the present application, the total weight of the curdlan and the rapeseed protein in the thickener may be at least 2% by weight of the thickener. In another embodiment of the present application, the total weight of the curdlan and the rapeseed protein in the thickener may be 80% or more by weight of the thickener. In one embodiment of the present application, the thickener is mainly composed of curdlan and rapeseed protein.

The present application further provides a food product comprising the texture improver. In one embodiment of the present application, the texture improver is used as a binder in a food product. In one embodiment of the present application, the texture improver is used as a thickener in a food product.

In the present application, the texture improver can be used in food products without intentionally adjusting the pH of the applied system, unless otherwise indicated.

In one embodiment of the present application, the food product is a meat product. In the present application, the meat product may be reconstituted meat, processed meat, meat sausage, minced meat, meat patty, meatballs, ham and the like. In one embodiment of the present application, the meat product is luncheon meat. In the present application, the texture improver is added as a binder to the meat product in an amount such that the weight percentage of the curdlan in the meat product is at least 0.1%, 0.2%, 0.3%, 0.4%, or 0.5%, or in an amount such that the weight percentage of the curdlan in the meat product is 0.1-5%, or 0.1-2.5%, or 0.1-2%, or 0. 1-1%. Preferably, the texture improver is added as a binder to the meat product in an amount such that the weight percentage of the curdlan in the meat product is at least 0.2%.

In one embodiment of the present application, the food product is a plant-based meat product.

In the present application, "plant-based meat" refers to plant-based protein meat, which may also be referred to as meat analogue, vegan meat products, meat alternatives, and meat substitutes, which have the texture, flavor, appearance or chemical characteristics of specific types of meat products. Generally, plant-based meat refers to food products made from vegetarian ingredients, and sometimes free of dairy and/or animal products. Preferably, in the present application, the plant-based meat product comprises soy textured protein and/or soy protein isolate.

In the present application, the texture improver as a binder in the plant-based meat product may be added in an amount such that the weight percentage of the curdlan in the plant-based meat product is at least 0.1%, 0.2%, 0.3%, 0.4%, 0.5%, 0.6%, 0.7%, 0.8%, 0.9% or 1%, or in an amount such that the weight percentage of the curdlan in the plant-based meat product is 0.1-15%, or 0.5-10%, or 2-7%, or 3-6%. Preferably, the texture improver is added as a binder to the plant-based meat product in an amount such that the weight percentage of the curdlan in the plant-based meat product is at least 0.5%. Preferably, the texture improver is added as a binder to the plant-based meat product in an amount such that the weight percentage of the curdlan in the plant-based meat product is at least 2%.

In the present application, a meat product or a plant-based meat product prepared using the texture improver as a binder can achieve a desirable gel texture and mouth-feel (such as gel strength, hardness, springiness, chewiness, etc.) even without the addition of transglutaminase, or without the addition of other hydrocolloids, or without the addition of methyl cellulose. In one embodiment of the present application, the gel texture and/or mouth-feel (such as hardness, springiness, and chewiness) of a meat product or a plant-based meat product prepared using the texture improver described herein as a binder may be comparable to the gel texture and/or mouth-feel of a meat product or a plant-based meat product prepared using methyl cellulose as a binder.

In one embodiment of the present application, the food product is a jelly or pudding, preferably the jelly or pudding has a protein content of 1-3% by weight. The texture improver is added as a thickener in the jelly or pudding in an amount such that the weight percentage of the curdlan in the jelly or pudding is 0.5-3%, preferably 1-2%. The jellies and puddings can be sterilized at high temperatures during preparation to form a stable, thermally irreversible and texturally desirable gel with a longer shelf life.

In one embodiment of the present application, the food product is a diet for people with dysphagia, a caretaker's diet, a finely ground diet, a pureed diet, or a fluid diet, or the like. The texture improver is added to the food product in an amount that the weight percentage of the curdlan in the food product is 0.2-6%, preferably 0.4-6%.

In one embodiment of the present application, the beverage is a plant-based protein beverage, preferably the plant-based beverage is free of dairy and/or animal proteins.

One aspect of the present application provides a meat product or a plant-based meat product comprising the texture improver as described herein.

One aspect of the present application provides a meat product or plant-based meat product comprising curdlan and rapeseed protein, wherein the weight ratio of the curdlan to the rapeseed protein is from 1:9 to 9:1, preferably from 1:4 to 4:1, more preferably from 2:3 to 3:2, and more preferably, the weight ratio of the curdlan to the rapeseed protein is about 1:1. The curdlan in the meat product or plant-based meat product can be 25%, 30%, 35%, 40%, 45%, 50%, 55%, 60%, or 65% by weight of the total weight of the curdlan and rapeseed protein, and preferably may be 45%, 46%, 47%, 48%, 49%, 50%, 51%, 52%, 53%, 54%, or 55% by weight of the total weight of the curdlan and rapeseed protein. The weight ratio of the curdlan to the rapeseed protein in the meat product or plant-based meat product may be 1:9, 1:4, 3:7, 2:3, 1:1, 3:2, 7:3, 4:1 or 9:1, preferably 1:3, 1:2.5, 1:2, 1:1.5, 1:1, 1.5:1, 2:1, 2.5:1, or 3:1, more preferably 2:3, 2.5:3, 1:1, 3:2.5 or 3:2. The weight percentage of the curdlan in the meat product may be at least 0.1%, 0.2%, 0.3%, 0.4% or 0.5%, or may be 0.1-5%, or 0.1-2.5%, or 0.1-2%, or 0.1-1%, and preferably, the weight percentage of the curdlan in the meat product is at least 0.2%. The weight percentage of the curdlan in the plant-based meat product may be at least 0.1%, 0.2%, 0.3%, 0.4%,0.5%, 0.6%, 0.7%, 0.8%, 0.9% or 1%, or may be 0.1-15%, or 0.5-10%, or 2-7%, or 3-6%, preferably the weight percentage of the curdlan in the plant-based meat product is at least 0.5%, more preferably the weight percentage of the curdlan in the plant-based meat product is at least 2%.

One aspect of the present application provides a plant-based meat product comprising:
1) 20-80% of water;
2) 0.1-20% of rapeseed protein;
3) 1-30% of textured vegetable protein;
4) 1-20% of oil;
5) 0.1-15% of curdlan; and
6) 0-10% of colorants and flavors.

The percentages are by weight, preferably the total amount of the ingredients does not exceed 100% of the plant-based meat product, and preferably the 0.1-20% of rapeseed protein is not part of the textured vegetable protein. The plant-based meat product, as compared to a plant-based meat product in which the 0.1-20% of rapeseed protein is replaced with an equal amount of soy protein isolate (non-textured), may have a hardness that is increased by at least about 20%, at least about 30%, at least about 40%, at least about 50%, at least about 60%, or at least about 70%, and a chewiness that is increased by at least about 20%, at least about 25%, at least about 30%, or at least about 35%.

The weight percentage of the rapeseed protein in the plant-based meat product may be from 2% to 15%, preferably from 3% to 13%, more preferably from 4% to 10%, and more preferably from 5% to 10%.

The remaining ingredients in the plant-based meat product may be water, preferably the remaining ingredient in the plant-based meat product is water. More preferably, the plant-based meat product is made up to the remaining amount with water. Preferably, the plant-based meat product has a water content of 40-75% (w/w), more preferably 50-70% (w/w).

The plant-based meat product may be a sausage, a smoked sausage, a frankfurter sausage, a meat patty, meatballs, meat cubes, hotdogs, mortadella, pâté or a wiener. In one embodiment of the present application, the plant-based meat product is a sausage. In one embodiment of the present application, the plant-based meat product is a meat patty, such as a hamburger patty.

The plant-based meat product may comprise 2-30%, preferably 4-25%, more preferably 6-20% by weight of textured vegetable protein (TVP).

The term "textured vegetable protein" (TVP) in the context of the present application refers to a protein product obtained by extrusion based on plant extracted materials, preferably derived from legumes, cereals (preferably gluten-free, such as oat fiber, maize fiber, rice fiber) or oilseeds, which can also be referred to as structured vegetable proteins. The legume may be soy or pea. The oilseed may be sunflower seed or rapeseed. In one embodiment of the present application, the textured vegetable protein is made by extrusion. In the present application, unless otherwise expressly stated, the vegetable protein is a non-textured (or non-structured) vegetable protein.

In the present application, the textured vegetable protein may be one or more of textured pea protein, fava bean protein, lentil protein, soy protein, and rapeseed protein. Preferably, the textured vegetable protein comprises a soy textured protein. Other legume derived proteins may also be used as the textured vegetable proteins described in the present application, such as lupins, peas (yellow peas, green peas), such as fava beans, kidney beans, green beans, haricot beans, pinto beans, mung beans, adzuki beans), chickpeas, lentils, soybeans and peanuts, and the like.

Fibers may be added to the plant-based meat product, and the fibers may be plant-based fibers such as pea fibers, oilseed fibers (such as sunflower seed fibers or cottonseed fibers), fruit fibers (such as apple fibers, pumpkin fibers), cereal fibers (such as oat fibers, maize fibers, rice fibers), bamboo fibers, potato fibers, inulin, or combinations thereof. Fibers are usually present in plant-based food products and cannot be or cannot be completely broken down by the human digestive enzymes, and are either soluble or insoluble fibers.

The plant-based meat product may comprise 1-20% by weight of oil, preferably 2-18% by weight, preferably 5-15% by weight, more preferably 7-12% by weight of oil. The oil may be algal oil, fungal oil, corn oil, olive oil, soybean oil, peanut oil, walnut oil, almond oil, sesame oil, cottonseed oil, rapeseed oil, safflower oil, sunflower oil, flaxseed oil, palm oil, palm kernel oil, coconut oil, babassu oil, shea butter, mango oil, cocoa butter, borage oil, blackcurrant oil, sea buckthorn oil, macadamia oil, saw palmetto oil, conjugated linoleic oil, arachidonic acid enriched oil, docosahexaenoic acid (DHA) enriched oil, eicosapentaenoic acid (EPA) enriched oil, palm stearic acid, rice bran oil or margarine, or other hydrogenated fats. Preferably, the oil is rapeseed oil.

The colorants and flavors may be present in an amount of 0.01-10% by weight of the plant-based meat product, preferably 0.1-8% by weight, more preferably 0.5-6% by weight.

The colorant comprises or is beet root or beet root powder. In the present application, the colorant may comprise or may be a carotenoid. Preferably, the carotenoids may be one or more of α-carotene, β-carotene, P-apo-8'-carotenal, β-apo-8'- carotenoic acid esters (such as ethyl ester), canthaxanthin, astaxanthin, astaxanthin esters, lycopene, lutein, zeaxanthin, crocetin or the derivatives thereof.

The flavors may comprise yeast extracts or process flavors.

The plant-based meat product may further comprise vitamins and/or minerals, preferably the vitamins are one or more of B2, B3, B6, B12, and/or the minerals are one or more of iron, selenium, and zinc. The addition of the nutrients makes the nutritional value of the plant-based meat product of the present application closer to that of a meat product without introducing an off-flavor to the product.

One aspect of the present application provides a method for preparing the texture improver, comprising the following steps:
a) weighing curdlan and rapeseed protein powder at a weight ratio;
b) mixing the weighed powders uniformly;
c) optionally adding a dispersant;
wherein the weight ratio of the curdlan to the rapeseed protein is from 1:9 to 9:1, preferably from 1:4 to 4:1, more preferably from 2:3 to 3:2, more preferably the weight ratio of the curdlan to the rapeseed protein is about 1:1. The weighing and mixing may be carried out by the conventional methods in the art. Optionally, the method for preparing the texture improver further comprises a step of granulating the uniformly mixed mixture.

One aspect of the present application provides a method for preparing the texture improver, comprising the following steps:
a) weighing curdlan and rapeseed protein powder at a weight ratio;
b) dispersing the weighed curdlan in water to obtain a solution;
c) dispersing the weighed rapeseed protein in the solution of step b);
wherein the weight ratio of the curdlan to the rapeseed protein is from 1:9 to 9:1, preferably from 1:4 to 4:1, more preferably from 2:3 to 3:2, more preferably the weight ratio of the curdlan to the rapeseed protein is about 1:1. The weighing and dispersing can be performed by the conventional methods in the art.

One aspect of the present application provides a method for preparing a meat product or plant-based meat product, comprising the step of adding curdlan and rapeseed protein as a binder during the preparation, wherein the weight ratio of the added curdlan to the rapeseed protein is from 1: 9 to 9: 1, preferably from 1:4 to 4:1, more preferably from 2:3 to 3:2, and more preferably the weight ratio of the curdlan to the rapeseed protein is about 1:1. In one embodiment of the present application, the weight ratio of the curdlan to the rapeseed protein added in the preparation method is about 1:1. The curdlan may be 25%, 30%, 35%, 40%, 45%, 50%, 55%, 60%, or 65% by weight of the total weight of the curdlan and rapeseed protein, preferably 45%, 46%, 47%, 48%, 49%, 50%, 51%, 52%, 53%, 54%, or 55% by weight of the total weight of the curdlan and rapeseed protein. The weight ratio of the curdlan to the rapeseed protein may be 1:9, 1:4, 3:7, 2:3, 1:1, 3:2, 7:3, 4:1, or 9:1, preferably, the weight ratio may be 1:3, 1:2.5, 1:2, 1:1.5, 1:1, 1.5: 1, 2:1, 2.5:1, or 3:1, and even more preferably, the weight ratio may be 2:3, 2.5:3, 1:1, 3:2.5, or 3:2. In the described preparation method, the curdlan may be added to the meat product in an amount such that the weight percentage of the curdlan in the meat product is at least 0.1%, 0.2%, 0.3%, 0.4% or 0.5%, or in an amount such that the weight percentage of the curdlan in the meat product is 0.1-5%, or 0.1-2.5%, or 0.1-2% or 0.1-1%, preferably in an amount such that the weight percentage of the curdlan in the meat product is at least 0.2%. In the preparation method, the curdlan may be added to the plant-based meat product in an amount such that the weight percentage of the curdlan in the plant-based meat product is at least 0.1%, 0.2%, 0.3%, 0.4%, 0.5%, 0.6%, 0.7%, 0.5%, 0.9%, or 1%, or in an amount such that the weight percentage of the curdlan in the plant-based meat product is 0.1 -15%, or 0.5-10%, or 2-7%, or 3-6%, preferably in an amount such that the weight percentage of the curdlan in the plant-based meat product is at least 0.5%, more preferably in an amount such that the weight percentage of the curdlan in the plant-based meat product is at least 2%. In the preparation method of the present application, the curdlan and the rapeseed protein may be added at the same time or at different times. In one embodiment of the present application, when preparing a meat product or a plant-based meat product, the curdlan is added first and the rapeseed protein is added later. In one embodiment of the present application, when preparing a meat product or a plant-based meat product, an aqueous dispersion of curdlan is added, followed by the addition of rapeseed protein or an aqueous dispersion of rapeseed protein.

One aspect of the present application provides a method for preparing a plant-based meat product, and the plant-based meat product comprises the following ingredients in the following weight percentages:
1) 20-80% of water;
2) 0.1-20% of rapeseed protein;
3) 1-30% of textured vegetable protein;
4) 1-20% of oil;
5) 0.1-15% of curdlan; and
6) 0-10% of colorants and flavors;
   preferably, the total amount of the ingredients does not exceed 100% of the plant-based meat product;
   the method of preparation comprises the following steps:
   1) dispersing the curdlan in water, adding the rapeseed protein and mixing uniformly to obtain a dispersion;
   2) adding the oil to the dispersion of step 1), mixing uniformly to obtain an emulsified slurry;
   3) adding the emulsified slurry obtained in step 2) to the textured vegetable protein;
   4) optionally, adding colorants and flavors;
   5) optionally, mixing all the ingredients uniformly, kneading them uniformly and placing them for shape-forming.

In the present application, the method for preparing a plant-based meat product may comprise a step of hydrating the textured vegetable protein and/or rapeseed protein.

In the present application, the preparation method may further comprise a step of freezing the meat product or plant-based meat product.

In the present application, the meat product or plant-based meat product may be prepared according to conventional methods in the art, unless otherwise indicated, and the pH or temperature of the system may not be intentionally adjusted when adding the curdlan and/or the rapeseed protein.

The meat products or plant-based meat products prepared by the method according to the present application take advantage of the freeze-resistant and heat-stable gel properties of the curdlan, as well as achieve desirable gel textures and mouth-feel. Methyl cellulose is one of the commonly used hydrocolloids in plant-based meat, but it does not meet consumer requirements for clean labeling of food products, and although methyl cellulose will gel when heated, it loses its gel texture upon cooling. The addition of egg white as a binder, while improving the taste and texture of plant-based meat, has the disadvantage of being allergenic as well as not complying with the concept of a pure vegan diet. The use of the method described in the present application for the preparation of meat products or plant-based meat products imparts a good gel texture and mouth-feel to the product, while reducing the overall amount of hydrocolloid, and/or reducing the use amount of methyl cellulose or egg-based binders.

One aspect of the present application provides a method for improving the texture of a meat product or a plant-based meat product, characterized in that curdlan and rapeseed protein are added during the preparation, wherein the weight ratio of the added curdlan to rapeseed protein is from 1:9 to 9: 1, preferably from 1:4 to 4:1, more preferably from 2:3 to 3:2, and more preferably the weight ratio of the added curdlan to rapeseed protein is about 1: 1. In one embodiment of the present application, the curdlan and rapeseed protein may be added simultaneously to the preparation system. In one embodiment of the present application, the curdlan and rapeseed protein are not added to the preparation system at the same time. In one embodiment of the present application, the method improves the gel strength of the meat product or the plant-based meat product. In one embodiment of the present application, the method improves the springiness or chewiness of the meat product or the plant-based meat product. In one embodiment of the present application, the method improves the adhesiveness of the meat product or the plant-based meat product. In one embodiment of the present application, the method improves the gel strength, chewiness and adhesiveness of the meat product or the plant-based meat product.

One aspect of the present application provides use of rapeseed protein for improving the gel strength of a composition comprising curdlan, optionally the composition comprising a second protein other than rapeseed protein, preferably the second protein is a plant-based protein, and more preferably the plant-based protein is non-textured, such as soy protein and/or potato protein. In one embodiment of the invention, the composition is a meat product or a plant-based meat product.

One aspect of the present application provides use of the texture improver to replace methyl cellulose as a binder in meat products or plant-based meat products. The texture improver reduces the use amount of methyl cellulose in the meat products and/or the plant-based meat products, and preferably, the texture improver may replace methyl cellulose in the meat products and/or the plant-based meat products. Methyl cellulose is one of the commonly used hydrocolloids in plant-based meat, but it does not meet consumer requirements for clean labeling of food products, and methyl cellulose, although gelling when heated, loses its gel texture upon cooling.

In the present application, the curdlan may be derived from microorganisms, animals or plants. The molecular formula of the curdlan may be expressed as (C₆H₁₀O₅)ₙ, preferably with n > 250. The molecular weight of the curdlan may be 40 kD-3000 kD (kilodaltons), such as 50 kD-500 kD, or may be higher than 1000 kD, or higher than 2000 kD.

Preferably, in the present application, the curdlan is produced by microbial fermentation, and the microorganisms are the microorganisms capable of producing curdlan, such as microorganisms from *Alcaligenes sp., Agrobacterium sp.,* or *Rhizobium sp.* In one embodiment of the present application, curdlan can be produced from a variant *of Alcaligenes faeccalis var. myxogenes* strain 10C3 (HARADA, T., MASADA, M., FUJIMORI. K. and MEAD A, I. (1966). Agric. Biol. Chem., 30, 196-198). The microbial fermentation of curdlan may be carried out according to conventional methods in the art. The curdlan can be extracted from the fermentation broth by conventional methods in the art, such as treating the fermentation product with an alkali solution, precipitating the hydrocolloid with an acid solution, then dehydrating with ethanol and drying, and finally pulverizing it to obtain the curdlan. In the present application, the curdlan can also be commercially available products.

In the present application, the rapeseed protein may be in the form of an isolate or a concentrate. Rapeseed protein isolates can be prepared as described in WO2018/007492, from cold pressed rapeseed oil crude meal to obtain isolates with a protein content of 50-98% (w/w), or a protein content of 70-95% (w/w), or a protein content of 90±5% (w/w). In one embodiment of the present application, the rapeseed protein isolate may comprise 40-65% (w/w) of cruciferins and 35-60% (w/w) of napins.

In one embodiment of the present application, the rapeseed protein is a rapeseed protein isolate, wherein the protein content is at least 90 wt% on a dry basis (calculated as Kjeldahl N x 6.25).

The rapeseeds from which the rapeseed proteins used in the present application are prepared typically belong to *Brassica napus* and *Brassica juncea.* These species comprise only low levels of erucic acid and glucosinolates and are also known as Canola. Canola is now a generic term defined as rapeseed comprising <2% of erucic acid and <30 mmol/g of glucosinolate. The predominant storage proteins found in rapeseed are cruciferins and napins.

In one embodiment of the present application, the rapeseed protein comprises cruciferins and/or napins, preferably, cruciferins and napins.

In the present application, the rapeseed protein comprises 40-65% (w/w) of cruciferins and 35-60% (w/w) of napins, or 15-65% (w/w) of cruciferins and 35-85% (w/w) of napins, or 60-80% (w/w) of cruciferins and 20-40% (w/w) of napins, or 80-100% (w/w) of cruciferins and 0-20% (w/w) of napins, or 0-20% (w/w) of cruciferins and 80-100% (w/w) of napins. Preferably, the total weight of cruciferins and napins does not exceed 100% by weight of the rapeseed protein.

In one embodiment of the present application, the rapeseed protein is low in anti-nutritional factors, wherein the phytate content is less than 1.5% (w/w), preferably less than 0.5% (w/w), and wherein the glucosinolate content is low (such as less than 5 µmol/g) and the phenolic content is low (such as less than 10 mg/g). In one embodiment of the present application, the rapeseed protein has a solubility of at least 88% under measurement conditions of pH 3-10.

In the present application, the texture of samples may be assessed by parameters such as hardness, chewiness, gumminess, cohesiveness, springiness and the like. The texture parameters of the samples can be measured by TPA (texture profile analysis), which is also known as two bite test. The analysis is mainly conducted to simulate the chewing motion of human mouth by texture analyzer probe to compress the samples twice, and the analyzer is connected to a computer, which outputs the texture test curve through an interface. Using software, multiple textural properties of the samples can be obtained, such as Hardness, Adhesiveness, Springiness, Cohesiveness, Gumminess, Chewiness, and Resilience, in which hardness is the maximum peak at first bite (or first compression).

In the present application, the TPA analysis of the samples can be set to determine according to the following mode:
(a) Pre-Test Speed: 2.00 mm/s;
(b) Test Speed: 2.00 mm/s;
(c) Post-Test Speed: 2.00mm/s;
(d) Target Mode: Strain;
(e) Strain: 75%;
(f) Time: 5s;
(g) Probe: P/1KSS.

In the present application, the texture analysis of the plant-based meat product may be performed by means of the texture profile analysis TPA, measured by means of a texture analyzer (such as TA.XT.plus, SMS^{®}, weight: up to 10 kg). In an embodiment of the present application, the TPA test for texture analysis of plant-based meat products may be set up as a double compression measurement with probe P/100, strain 40%, pre-test speed 1 mm/s, test speed 1 mm/s and post-test speed 1 mm/s.

The texture improver described in the present application significantly improves the gel strength of compositions comprising curdlan by combining the curdlan with rapeseed protein for use, and effectively reduces the weakening effect of proteins on the gel strength of curdlan in the applied system. The meat product or the plant-based meat product provided by the present application, or the meat product or the plant-based meat product obtained by the preparation method of the present application can also have desirable gel texture and mouth-feel (such as gel strength, hardness, springiness, chewiness, etc.) even without the addition of transglutaminase, or without compounding curdlan with other hydrocolloids, or without the addition of methyl cellulose. This effectively reduces the overall usage of hydrocolloids, simplifies the preparation process, reduces the allergenicity, and meets the demand for clean label.

### EXAMPLES

The present application is further illustrated by way of examples. These descriptions are only exemplary and intended to illustrate the present application, not to limit the protection scope of the present application.

### Experimental materials

Rapeseed protein isolate (RPI) was prepared from cold pressed rapeseed oil crude meal according to the method described in WO2018/007492, with a protein content of 90% (w/w), a cruciferins content of 40-65% (w/w), a napins content of 35-60% (w/w), a phytate content of less than 0.26% (w/w), and a solubility of at least 88% measured over a pH range of 3-10 at a temperature of 23±2°C. pH was measured using a PHM220 pH meter equipped with a PHC3085-8 calomel pH electrode (D=5MM).

Curdlan was purchased from Zhejiang DSM Zhongken Biotechnology Co. Ltd. Soybean protein isolate was purchased from DuPont. Potato protein was purchased from AVEBE, and vegetable oil was purchased from Yihai Kerry (corn oil). Methyl cellulose was purchased from JRS. Rapeseed oil was purchased from COFCO Jinlongyu. Structural protein was purchased from Hongyang, Taiwan. Yeast extract was purchased from DSM. Colorants, gourmet powder and spices were commercially available products.

### Example 1: Interaction between curdlan and different proteins

### Experimental Steps:

The desired ingredients such as curdlan and rapeseed protein isolate as shown in the experimental group of Table 1 were weighed and treated as follows:
1) dispersing the curdlan in water at 40°C, stirring and dispersing for 2min at 600r/min;
2) dispersing rapeseed protein isolate in the solution of step 1), stirring for 5min at the same speed;
3) slowly adding vegetable oil and continuing stirring for 5min;
4) pouring into a gel cup and steam heating (100°C) for 30min;
5) after cooling, standing at 25°C for 2h, and testing the corresponding parameters by TPA (TA.XT.plus);
in which the TPA mode measurement settings were as follows:
- Pre-Test Speed: 2.00mm/s;
- Test Speed: 2.00mm/s;
- Post-Test Speed: 2.00mm/s;
- Target Mode: Strain;
- Strain: 75%;
- Time: 5s;
- Probe (Probe): P/1KSS

The test results as obtained were the test results of the experimental group.

Control group 1: The rapeseed protein isolate of the experimental group was replaced with an equal amount of soybean protein isolate, while other operations and test methods remained the same as those of the experimental group, giving the test results of control group 1.

Control group 2: The rapeseed protein isolate of the experimental group was replaced with an equal amount of potato protein, while other operations and test methods remained the same as those of the experimental group, giving the test results of control group 2.

The TPA test results of the experimental group and control groups were shown in Table 2.

**Table 1: Raw materials and amounts in experimental group and control groups**

| Ingredients and amount (wt%) | Experimental group | Control group 1 | Control group 2 |
|---|---|---|---|
| curdlan | 5 | 5 | 5 |
| rapeseed protein isolate | 5 | - | - |
| soybean protein isolate | - | 5 | - |
| potato protein | - | - | 5 |
| vegetable oil | 5 | 5 | 5 |
| water | 85 | 85 | 85 |

**Table 2: TPA test results**

| TPA test results | Experimental group | Control group 1 | Control group 2 |
|---|---|---|---|
| Hardness, g | 1620.1 | 542.3 | 120.0 |
| Chewiness | 543.9 | 42.2 | 28.0 |
| Gumminess | 573.1 | 126.1 | 29.8 |

The hardness in Table 2 was the gel strength. As seen from the experimental data in Table 2, when different proteins were gelled together with curdlan, the gel strength and texture of rapeseed protein containing samples were significantly better than the other proteins, followed by soybean protein isolate, and the combination of potato proteins with the curdlan had the weakest gel strength.

### Example 2: Hamburger patties

### Experimental Steps:

According to the amounts shown in Table 3, the required raw materials were weighed and operated in accordance with the following process, and the burger patties with a single weight of 50 g or 70 g were prepared:
1) dispersing water and colorant well and immersing the structural proteins therein (>1 hour);
2) dispersing the hydrocolloid in water (curdlan was dispersed in room temperature water and MC was dispersed in ice water), mixing well, then adding the protein powder, mixing well, slowly adding rapeseed oil under stirring to obtain the emulsified slurry of the binder;
3) cutting/chopping the immersed protein granules into small pellets;
4) weighing all the seasonings and flavors and adding them directly to the structural protein, and adding the emulsified slurry obtained in step 2) as well;
5) mixing the mixture well and kneading uniformly;
6) resting for 0.5-1 hour (the MC containing sample needs to be rested at 4°C and the sample of curdlan can be rested at 40°C), and shaping;
7) freezing for storage after shaping;
8) frying the burger patties for about 3-4 min on each side until the center temperature reached 70°C or above.

The fried hamburger patties were subjected to textural testing, which was evaluated by testing two parameters, hardness and chewiness, by means of a texture meter (TA.XT plus), and the textural parameters of the food were determined at a serving temperature of 50°C.

Texture test method: after preparing the samples, the probe was HDPBS and the measurement conditions were set as follows:
- Mode: Force in Compression
- Pre-Test Speed: 1.50 mm/s;
- Test Speed: 1.50 mm/s;
- Post-Test Speed: 10.00 mm/s;
- Target Mode: Distance;
- Distance: 8.00 mm;
- Trigger Type: Automatic (Force);
- Trigger Force: 10.0 g

The results of the texture test of the hamburger patties were shown in Table 4.

**Table 3: Raw materials of hamburger patties and amounts thereof**

| Raw materials (wt%) | | 1 | 2 | 3 | 4 |
|---|---|---|---|---|---|
| Part 1 | Soybean protein isolate | 5 | 5 | | 2.5 |
| | Rapeseed protein isolate | | | 5 | 2.5 |
| | Curdlan | | 4 | 4 | 4 |
| | Methyl cellulose (MC) | 1.5 | | | |
| | Water | 31 | 29 | 29 | 29 |
| | Rapeseed oil | 5 | 5 | 5 | 5 |
| Part 2 | Structural protein | 18 | 18 | 18 | 18 |
| | Colorant | 0.07 | 0.07 | 0.07 | 0.07 |
| | Water | 30 | 30 | 30 | 30 |
| Part 3 | Water | 30 | 30 | 30 | 30 |
| | Gourmet powder | 0.5 | 0.5 | 0.5 | 0.5 |
| | Yeast extract | 1 | 1 | 1 | 1 |
| | Spices | appropriate amount | appropriate amount | appropriate amount | appropriate amount |

**Table 4: Texture test results of hamburger patties**

| Texture test results | 1 | 2 | 3 | 4 |
|---|---|---|---|---|
| Hardness (kg) | 3.10 | 1.14 | 2.93 | 2.02 |
| Chewiness (kg·sec) | 2.80 | 1.41 | 2.11 | 1.93 |

As can be seen from the data in Table 4, the strongest texture was obtained in the hamburger patties when using methyl cellulose as stabilizer (Experiment 1), followed by the combination of curdlan and rapeseed protein (Experiment 3), which was comparable to that obtained with the use of methyl cellulose, and therefore was considered that the combination can be a substitute for methyl cellulose as a binder. In addition, comparing the textures of Experiments 2 and 4, it was found that the combination of curdlan and rapeseed protein significantly enhanced the strength of the burger patty texture at the same protein content.

## Claims

1. A texture improver comprising curdlan and rapeseed protein, wherein a weight ratio of the curdlan to the rapeseed protein is from 1:9 to 9:1.

2. The texture improver according to claim 1, wherein the weight ratio of the curdlan to the rapeseed protein is from 1:4 to 4:1, preferably from 2:3 to 3:2.

3. The texture improver according to claim 1, wherein the rapeseed protein is a rapeseed protein isolate.

4. The texture improver according to any one of claims 1 to 3, which is free of or substantially free of methyl cellulose.

5. The texture improver according to any one of claims 1 to 3, which is a binder for meat product or plant-based meat product.

6. A food or beverage comprising the texture improver according to any one of claims 1-3.

7. A meat product or plant-based meat product comprising the texture improver according to claim 5.

8. The meat product or plant-based meat according to claim 7, wherein the texture improver is added in an amount such that a weight percentage of curdlan in the meat product or plant-based meat product is 0.1-15%.

9. The plant-based meat product according to claim 7, comprising by weight percentage:
1) 20-80% of water;
2) 0.1-20% of rapeseed protein;
3) 1-30% of textured vegetable protein;
4) 1-20% of oil;
5) 0.1-15% of curdlan; and
6) 0-10% of colorants and flavors.

10. The plant-based meat product according to claim 9, wherein the textured vegetable protein is selected from one or more of textured pea protein, fava bean protein, lentil protein, soy protein, or rapeseed protein.

11. The plant-based meat product according to claim 9, which is selected from sausage, meat patty, meatballs, or meat cubes.

12. A method for preparing the texture improver according to any one of claims 1 to 3, comprising the steps of:
a) weighing curdlan and rapeseed protein powder at the weight ratio;
b) mixing the weighed powders uniformly;
c) optionally, adding a dispersant.

13. A method for preparing a meat product or a plant-based meat product, comprising a step of adding curdlan and rapeseed protein as a binder during the preparation, wherein the curdlan is added in an amount of 0.1-15% by weight, and a weight ratio of the curdlan to the rapeseed protein is from 1:9 to 9: 1, preferably from 1:4 to 4:1, more preferably from 2:3 to 3:2.

14. Use of rapeseed protein for improving the gel strength of a composition comprising curdlan, wherein the composition is a meat product or a plant-based meat product.

15. Use of the texture improver of any one of claims 1-3 for replacing methyl cellulose as a binder in a meat product or a plant-based meat product.
